# EUROPÄISCHE PATENTSCHRIFT

(11) **EP 2 676 030 B1**
(45) Veröffentlichungstag und Bekanntmachung des Hinweises auf die Patenterteilung: **24.09.2014**
(21) Anmeldenummer: 12702966.8
(22) Anmeldetag: 31.01.2012
(51) Int. Cl.: F03B 3/18, F03B 3/02

(54) **HYDRAULISCHE STRÖMUNGSMASCHINE**
WATER TURBINE
TURBINE HYDRAULIQUE

(30) Priorität: 16.02.2011 DE 102011011444
(43) Veröffentlichungstag der Anmeldung: 25.12.2013
(73) Patentinhaber: Voith Patent GmbH, 89522 Heidenheim (DE)
(72) Erfinder: SCHABASSER, Martin, A-3123 Obritzberger (AT)
(74) Vertreter: Weitzel, Wolfgang
(86) Internationale Anmeldenummer: PCT/EP2012/000404
(87) Internationale Veröffentlichungsnummer: WO 2012/110197

(56) Entgegenhaltungen:
- DE-B- 1 258 360
- GB-A- 931 758
- US-A- 1 462 890
- US-A- 1 517 896
- US-A- 1 762 121

## Beschreibung

Die Erfindung betrifft eine hydraulische Strömungsmaschine, insbesondere eine Wasserturbine, Pumpturbine oder Pumpe, gemäß dem Oberbegriff von Anspruch 1. Dabei kann es sich um Maschinen der Francis-Bauart oder der Kaplan-Bauart oder um sonstige Maschinen handeln. Wesentlich ist, dass es um Maschinen mit einem Spiralgehäuse geht.

Als Beispiel wird auf US-A-4 496 282, US-A-1 462 890 oder auf DE 199 50 228 A1 verwiesen.

Das Spiralgehäuse einer solchen Strömungsmaschine umschließt das Laufrad. Es liegt in einer zur Drehachse des Laufrades senkrechten Ebene. Da die Laufradachse im allgemeinen vertikal verläuft, handelt es sich dabei um eine horizontale Ebene.

Das Spiralgehäuse ist auf seiner Innenseite gegen das Laufrad hin offen. Es weist somit einen Ringspalt auf, der um den inneren Umfang des Spiralgehäuses herumläuft, so dass Arbeitsmedium aus dem Spiralgehäuse durch den Ringspalt auf dem gesamten inneren Umfang zum Laufrad strömen kann. Der Ringspalt ist somit durch zwei umlaufende Kanten definiert.

An den Ringspalt schließt sich in Strömungsrichtung gesehen ein Traversenring an. Dieser umfasst zwei Traversenringdecks, die zur Drehachse des Laufrades konzentrisch angeordnet sind und einen gegenseitigen Abstand in axialer Richtung haben. Die Traversenringdecks sind durch die sogenannten Traversen miteinander verbunden, die die Zugkräfte aufnehmen. Außerdem ist jede der genannten umlaufenden Kanten des Spiralgehäuses mit einem der beiden Traversenringdecks fest verbunden.

Das Spiralgehäuse ist dabei aus in Umfangsrichtung aneinandergereihten Rohrschüssen zusammengesetzt, welche die Traversenringdecks umhüllen. Die einzelnen Rohrschüsse sind dabei herkömmlich einerseits mit den Traversenringdecks, und andererseits miteinander verschweißt. Die aneinanderstoßenden Kanten zweier aufeinanderfolgender Rohrschüsse sind dabei unter Bildung einer Gehrung miteinander verschweißt.

Da im Betrieb der Strömungsmaschine die Rohrschüsse vom Wasserdruck stark belastet werden, muss diese Verbindungsstelle derart gestaltet werden, dass eine gleichmäßige Beanspruchung dieser erfolgt. Bekannt Ansätze zur Reduzierung dieser Beanspruchung sahen bisher vor, größere Übergangsradien zwischen den beiden aneinanderstoßenden Kanten der Rohrschüsse vorzusehen. Derartige Übergangsradien gehen jedoch mit einer erhöhten Wanddicke des Spiralgehäuses und damit mit einem größeren Materialaufwand einher. Somit stellt das gesamte Spiralgehäuse samt Traversenring ein aufwändiges und teures Element einer solchen hydraulischen Strömungsmaschine dar. Ebenfalls ist die Montage eines solchen zeitaufwändig.

Der Erfindung liegt die Aufgabe zugrunde, eine hydraulische Strömungsmaschine der eingangs genannten Art derart zu gestalten, dass die Beanspruchungen des Spiralgehäuses deutlich vermindert, der Materialeinsatz vermindert und die Herstellungs- sowie Montagekosten deutlich reduziert werden können.

Diese Aufgabe wird durch die Merkmale des unabhängigen Anspruchs gelöst.

Eine erfindungsgemäße hydraulische Strömungsmaschine mit einem von Wasser beaufschlagten Laufrad, das eine Vielzahl von Laufschaufeln aufweist, umfasst ein Spiralgehäuse, das das Laufrad umschließt, sowie einen Traversenring, umfassend zwei Traversenringdecks, die durch Traversen miteinander verbunden sind. Weiterhin sind den Traversenring umhüllende Rohrschüsse vorgesehen, welche in Umfangsrichtung aufeinanderfolgend miteinander verbunden sind und deren Strömungsquerschnitt sich in Strömungsrichtung des Wassers verjüngt.

Erfindungsgemäß ist auf dem Außenumfang des Spiralgehäuses im Bereich der Verbindungsstelle zwischen zwei Rohrschüssen wenigstens ein Versteifungselement angebracht, welches jeweils zwei Rohrschüsse lokal miteinander verbindet.

Der Erfinder hat erkannt, dass sich durch diese äußerst wirkungsvolle Maßnahme des Aufbringens eines Versteifungselements über der Verbindungsstelle zweier Rohrschüsse eine optimale Spannungsverteilung am Übergang beider Rohrschüsse erzielen lässt. Durch diese optimale Spannungsverteilung können nun geringere Wandstärken des Spiralgehäuses eingesetzt werden, wodurch der Materialaufwand verringert sowie die Herstellungskosten einer solchen hydraulischen Strömungsmaschine reduziert werden.

Mit Vorteil ist das Versteifungselement als Versteifungsrippe mit U-förmigem Querschnitt ausgebildet, umfassend zwei Schenkel, wobei je ein Schenkel auf je einem Rohrschuss angeordnet ist. Da in diesem Fall das Versteifungselement die Form einer Öse hat, kann es gleichzeitig als Anschlagmittel zum Befestigen von Hebezeugen verwendet werden, wodurch die Montage eines solchen Spiralgehäuses deutlich vereinfacht wird.

Die Erfindung soll nun anhand der Figuren näher erläutert werden.

Es zeigen:
- Figur 1: einen Querschnitt durch die Drehachse einer als Francis-Turbine ausgeführten hydraulischen Strömungsmaschine;
- Figur 2a: eine räumliche Darstellung eines Kreisausschnittes aus einem Traversenring und einem Spiralgehäuse;
- Figur 2b: eine Draufsicht auf den Gegenstand von Figur 2.

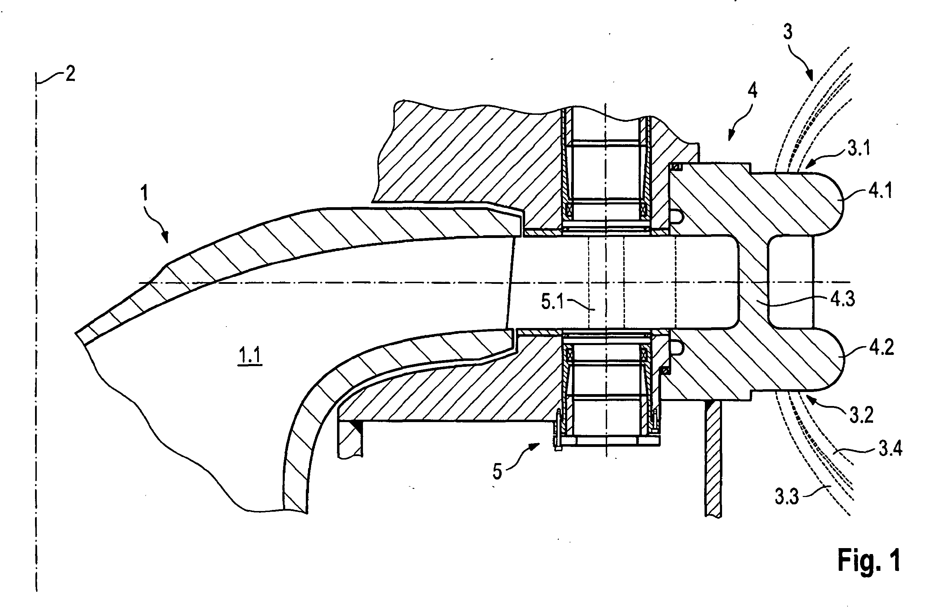

Die in Figur 1 dargestellte Francis-Turbine weist ein Laufrad 1 auf. Dieses umfasst eine Vielzahl von Laufschaufeln 1.1. Das Laufrad 1 läuft um eine Drehachse 2 um.

Das Laufrad 1 ist von einem Spiralgehäuse 3 umschlossen. Das Spiralgehäuse 3 ist zum Beispiel von kreisförmigem Querschnitt. Es hat einen umlaufenden Ringspalt, der gegen das Laufrad 1 hin offen ist. Der Ringspalt ist begrenzt durch umlaufende Kanten 3.1, 3.2.

An den Ringspalt schließt sich ein Traversenring 4 an. Dieser weist zwei Traversenringdecks 4.1 und 4.2 auf. Zur Abstützung der Traversenringdecks 4.1 und 4.2 ist wenigstens eine Traverse 4.3 vorgesehen.

Die Bereiche der umlaufenden Kanten 3.1, 3.2 des Ringspalts 3 sind mit den Traversenringdecks 4.1, 4.2 verschweißt. Man erkennt weiterhin zwei Rohrschlüsse 3.3, 3.4. Letztere umhüllen den Traversenring 4 und sind in Umfangsrichtung des Spiralgehäuses 3 aufeinanderfolgend miteinander verschweißt. Die Rohrschlüsse 3.3, 3.4 bilden das Spiralgehäuse 3.

Zwischen Traversenring 4 und Laufrad 1 ist ein Leitapparat 5 mit Leitschaufel 5.1 vorgesehen.

An das Laufrad 1 ist in Strömungsrichtung gesehen ein nicht gezeigtes Saugrohr angeschlossen.

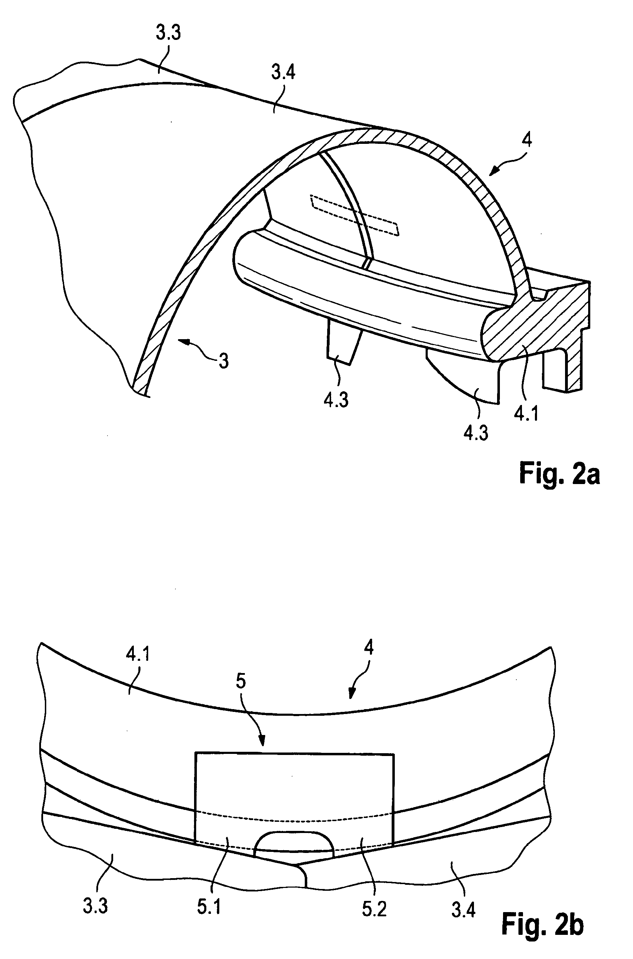

In Figur 2a ist ein Kreisausschnitt des Spiralgehäuses 3 sowie des daran angeschlossenen Traversenrings 4 in einer räumlichen Darstellung gezeigt. Im Wesentlichen sind dort dieselben Elemente mit denselben Bezugszeichen wie in Figur 1 versehen.

Wie man der Figur 2a entnehmen kann, ist auf dem von Wasser nicht umströmten Außenumfang des Spiralgehäuses 3 im Bereich des Übergangs zwischen Spiralgehäuses 3 und Traversenring 4 ein Versteifungselement vorgesehen (siehe die gestrichelten Linien). Letzteres ist auf dem Außenumfang des Spiralgehäuses 3 aufgeschweißt und verbindet somit die beiden aufeinanderfolgenden Rohrschüsse 3.3 und 3.4 miteinander. Natürlich wären auch andere, insbesondere kraft- oder formschlüssige Verbindungen denkbar. Das Versteifungselement dient zur Verbesserung der Spannungsverteilung in der Verbindungsstelle der beiden aneinanderstoßenden Kanten der Rohrschüsse 3.3, 3.4. Es liegt in einer Lotebene an das Spiralgehäuse 3. Dies könnte jedoch auch anders sein. Durch das Versteifungselement wird die sogenannte Gehrungsspannung, welche sich in den vorliegend unter Gehrung zusammengefügten aneinanderstoßenden Kanten der Rohrschüsse 3.3, 3.4 ergibt, vermindert. Hierdurch können geringere Wandstärken des Spiralgehäuses eingesetzt werden, sodass sich der Materialaufwand verringert.

Figur 2b zeigt den Gegenstand von Figur 2a in einer Draufsicht auf das Versteifungselement. Dort sind wiederum dieselben Elemente mit denselben Bezugszeichen wie in Figur 2a bezeichnet.

Man erkennt, dass das Versteifungselement als Versteifungsrippe 5 mit einem U-förmigen Querschnitt ausgeführt ist, umfassend zwei Schenkel 5.1 und 5.2, von denen jeder hier durch Schweißen mit einem entsprechenden Rohrschuss 3.3 beziehungsweise 3.4 verbunden ist. Natürlich wäre auch eine von der U-Form abweichende Querschnittsform der Versteifungsrippe denkbar. Im vorliegenden Fall kann diese aufgrund der ösenartigen Form zusätzlich als Anschlagmittel dienen, sodass die verschweißten Rohrschüsse 3.3, 3.4 einfach mittels Hebezeug transportiert werden können.

Weiterhin kann eine Vielzahl solcher Versteifungsrippen über dem Umfang des Spiralgehäuses 3 vorgesehen sein.

### Bezugszeichenliste

- 1: Laufrad
- 1.1: Laufschaufel
- 2: Drehachse
- 3: Spiralgehäuse
- 3.1, 3.2: umlaufende Kante
- 3.3, 3.4: Rohrschüsse
- 4: Traversenring
- 4.1, 4.2: Traversenringdeck
- 4.3: Traverse
- 5: Versteifungsrippe
- 5.1, 5.2: Schenkel

## Patentansprüche

1. Hydraulische Strömungsmaschine
1.1 mit einem von Wasser beaufschlagten Laufrad (1), das eine Vielzahl von Laufschaufeln (1.1) aufweist;
1.2 mit einem Spiralgehäuse (3), das das Laufrad (1) umschließt;
1.3 mit einem Traversenring (4), umfassend zwei Traversenringdecks (4.1, 4.2), die durch Traversen (4.3) miteinander verbunden sind;
1.4 mit den Traversenring (4) umhüllenden Rohrschüssen (3.3, 3.4), welche in Umfangsrichtung aufeinanderfolgend miteinander verbunden sind und deren Strömungsquerschnitt sich in Strömungsrichtung des Wassers verjüngt;
**gekennzeichnet durch** die folgenden Merkmale:
1.5 auf dem Außenumfang des Spiralgehäuses (3) ist über der Verbindungsstelle zwischen zwei Rohrschüssen (3.3, 3.4) eine Mehrzahl von am Umfang des Spiralgehäuses (3) verteilten Versteifungselementen angebracht, welche jeweils zwei Rohrschüsse (3.3, 3.4) lokal miteinander verbinden;
1.6 jedes Versteifungselement ist im Bereich des Übergangs vom Spiralgehäuse (3) zum jeweiligen Traversenringdeck (4.1, 4.2) auf dem Spiralgehäuse (3) angeordnet; und
1.7 jedes Versteifungselement ist als Versteifungsrippe (5) in Form einer Öse mit U-förmigem Querschnitt ausgebildet, umfassend zwei Schenkel (5.1, 5.2), wobei je ein Schenkel (5.1, 5.2) auf je einem Rohrschuss (3.3, 3.4) angeordnet ist.

## Claims

1. A hydraulic turbomachine
1. having a runner (1) acted upon by water, which includes a plurality of guide vanes (1.1);
2. having a spiral housing (3) enclosing the runner (1);
3. having a traverse ring (4), comprising two traverse ring decks (4.1, 4.2), which are interconnected by cross-beams (4.3);
4. with lengths of pipe (3.3, 3.4) enveloping the traverse ring (4), which are interconnected consecutively in the circumferential direction and whose flow cross-section tapers in the flow direction of the water; **characterised by** the following features:
1.5 at least one reinforcing element is mounted on the outer circumference of the spiral housing (3) in the region of the connecting point between two lengths of pipe (3.3, 3.4), which locally interconnects two lengths of pipe (3.3, 3.4) at a time;
1.6 a plurality of reinforcing elements distributed on the circumference of the spiral housing is provided above the connecting point between two lengths of pipe (3.3, 3.4);
1.7 the reinforcing element is arranged on the spiral housing (3) in the region of the transition from the spiral housing (3) to the respective traverse ring deck (4.1,4.2).

## Revendications

1. Machine à courant continu hydraulique
1.1 ayant un disque de rotor (1) actionné par l'eau, présentant une pluralité de pales (1.1);
1.2 possédant un carter en volute (3), entourant le disque de rotor (1);
1.3 possédant une couronne de traverse (4), comprenant deux ponts de couronne de traverse (4.1, 4.2), qui sont connectés entre eux par des traverses (4.3) ;
1.4 possédant des éléments tubulaires (3.3, 3.4) gainant la couronne de traverse (4), éléments connectés les uns aux autres et se succédant dans le sens de la circonférence et dont la section d'écoulement va en se rétrécissant dans le sens d'écoulement de l'eau ;
présentant les caractéristiques suivantes:
1.5 la périphérie externe du carter en volute (3) comporte une pluralité d'éléments de renforcement répartis sur la circonférence du carter en volute (3), au-dessus du point de jonction entre deux éléments tubulaires (3.3, 3.4), lesquels éléments de renforcement relient localement deux éléments tubulaires (3.3, 3.4) respectivement ;
1.6 chaque élément de renforcement est disposé dans la zone de transition entre le carter en volute (3) et le pont de couronne de traverse respectif (4) sur le carter en volute (3) ; et
1.7 chaque élément de renforcement est conçu comme une nervure de renforcement (5) sous forme d'oeillet de section transversale en U, comprenant deux brins (5.1, 5.2), chaque brin (5.1, 5.2) étant disposé sur son élément tubulaire respectif (3.3, 3.4).
